# EUROPÄISCHE PATENTSCHRIFT

(11) **EP 1 700 549 B1**
(45) Veröffentlichungstag und Bekanntmachung des Hinweises auf die Patenterteilung: **01.08.2007**
(21) Anmeldenummer: 06405061.0
(22) Anmeldetag: 09.02.2006
(51) Int. Cl.: A47J 31/42, A47J 42/50

(54) **Kaffeemaschine**
Coffee machine
Machine à café

(30) Priorität: 08.03.2005 CH 3962005
(43) Veröffentlichungstag der Anmeldung: 13.09.2006
(73) Patentinhaber: Saeco IPR Limited, Dublin 12 (IE)
(72) Erfinder: Vetterli, Heinz, 8855 Wangen (CH)
(74) Vertreter: Rottmann, Maximilian

(56) Entgegenhaltungen:
- EP-A- 0 472 272
- EP-A- 0 766 943
- EP-A- 1 440 642
- US-A- 5 193 438
- US-B1- 6 626 085

## Beschreibung

Die Erfindung betrifft eine Kaffeemaschine nach dem Oberbegriff des Anspruchs 1.

Kaffeemaschinen der hier zur Rede stehenden Art werden überwiegend im Haushalt eingesetzt und dienen der vollautomatischen Zubereitung von frischen Kaffeegetränken. Für die Zubereitung eines Kaffeegetränks wird aus dem Bohnenbehälter jeweils eine definierte Menge Kaffeebohnen dem Mahlwerk zugeführt und darin gemahlen. Die gemahlenen Bohnen bzw. das Kaffeepulver wird der Brühkammer zugeführt, wo es verdichtet und danach vom Brühwasser unter Druck durchströmt und extrahiert wird. Um dem Benutzer die Möglichkeit zu geben, ein Kaffeegetränk aus einer anderen als der im Bohnenbehälter aufgenommenen Kaffeesorte herzustellen, sind Kaffeemaschinen bekannt, die mit einem Einfüllschacht versehen sind, über den gemahlener Kaffee der Brühkammer direkt, d.h. unter Umgehung des Mahlwerks, zugeführt werden kann.

Aus der US 5,193,438 ist eine Kaffeemaschine bekannt, die mit zwei Bohnenbehältern und zwei Mahlwerken versehen ist. Die Drehachsen der beiden Mahlwerke verlaufen horizontal. Die Auslässe der beiden Mahlwerke sind mit einem vertikalen Stutzen verbunden, der eine gemeinsame Abgebeöffnung aufweist. Der vertikale Stutzen soll zum Zwecke einer einfachen Reinigung leicht entfernbar sein. Unterhalb der Abgabeöffung des Stutzens ist ein drehbarer Support angeordnet, der mit zwei einander diametral gegenüberliegenden Aufnahmekammern für gemahlenen Kaffee versehen ist. Der Support ist derart drehbar angeordnet, dass die jeweilige Aufnahmekammer von einer Füllstellung in eine Brühstellung gedreht werden kann, in welch letzterer das in der entsprechenden Aufnahmekammer aufgenommene Kaffeepulver zur Zubereitung eines Kaffeegetränks aufgebrüht werden kann. Das Vorsehen von zwei unabhängigen Bohnenbehältern und zwei Mahlwerken soll es ermöglichen, zwei unterschiedliche Kaffeegetränke herzustellen.

Aus der EP-A-0 472 272 ist eine vollautomatische Espresso-Kaffeemaschine bekannt, die neben den üblichen Komponenten eine Milchschäumeinheit sowie zwei Bohnenbehälter mit zwei zugehörigen Mahlwerken aufweist. Während der eine Bohnenbehälter zur Aufnahme von herkömmlichen Kaffeebohnen vorgesehen ist, ist der andere Bohnenbehälter zur Aufnahme von koffeinfreien Kaffeebohnen ausgebildet. Unterhalb der beiden Mahlwerke ist eine Brüheinheit angeordnet, die über einen Zufuhrkanal direkt mit dem einen Bohnenbehälter verbunden ist. Der andere Bohnenbehälter kann über einen elektromechanisch betätigten Zuführschacht mit der Brüheinheit verbunden werden. Durch diese Ausbildung wird ermöglicht, dass wahlweise aus dem einen oder anderen Bohnenbehälter Kaffeebohnen entnommen und gemahlen werden können, so dass die Brüheinheit entweder mit herkömmlichem oder koffeinfreiem Kaffeepulver beschickt und ein entsprechendes Kaffeegetränk frisch zubereitet werden kann.

Schliesslich ist aus der EP-A-766 943 eine mit einer elektronischen Steuereinheit versehene Kaffeemaschine bekannt, die ebenfalls zwei Bohnenbehälter und zwei zugehörige Mahlwerke aufweist. Die elektronische Steuereinheit ist zum Ansteuern der Mahlwerke vorgesehen. Die Steuerung soll dabei u.a. die Abnützung des jeweiligen Mahlwerks berücksichtigen, so dass ein konstante Qualität des zubereiteten Kaffeegetränks sichergestellt werden kann. Im Gegensatz zu den beiden vorgängig genannten Kaffeemaschinen sind bei dieser Maschine zwei separate Brüheinheiten in der Form von zwei manuellen Filterhaltern vorgesehen, welche unterhalb des jeweiligen Mahlwerks fixierbar sind.

Ausgehend vom genannten Stand der Technik besteht die Aufgabe der Erfindung darin, eine Kaffeemaschine gemäss dem Oberbegriff des Anspruchs 1 derart weiterzubilden, dass der Benutzer die Möglichkeit hat, ein Kaffeegetränk herzustellen, bei dem nicht nur eine Bohnensorte zur Zubereitung eines Kaffeegetränks verwendet wird.

Hierzu wird nach der Erfindung eine Kaffeemaschine gemäss dem Anspruch 1 bereitgestellt.

Indem die Kaffeemaschine mit Vorwahlmitteln versehen ist, mittels welchen die anteilsmässige Menge an Kaffeebohnen, die aus dem jeweiligen Fach oder Bohnenbehälter entnommen und mittels des zugeordneten Mahlwerks gemahlen und zum Aufbrühen eines Kaffeegetränks verwendet wird, veränderbar ist, kann der Benutzer für die Zubereitung eines Kaffeegetränks beide Bohnensorten nutzen. Wahlweise kann natürlich auch nur die eine oder andere Bohnen- bzw. Kaffeesorte zur Zubereitung eines Kaffeegetränks verwendet werden.

Bevorzugte Ausbildungen der Vorrichtung sind in den abhängigen Ansprüchen 2 bis 8 näher umschrieben.

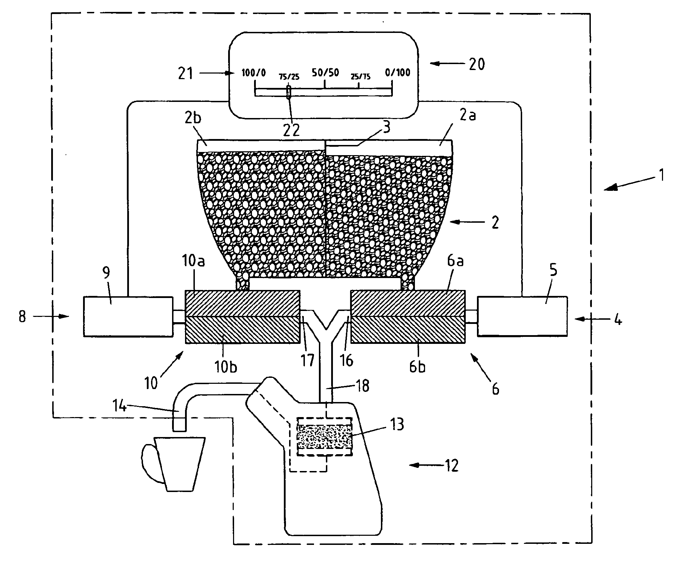

Ein bevorzugtes Ausführungsbeispiel der Erfindung wird nachfolgend anhand der einzigen Zeichnung näher erläutert, in welcher eine Kaffeemaschine schematisch dargestellt ist. Die Kaffeemaschine 1 weist einen Bohnenbehälter 2 auf, der mittels eines Trennstegs 3 in zwei Fächer 2a, 2b unterteilt ist. Unterhalb des jeweiligen Fachs 2a, 2b ist je ein Mahlwerk 4, 8 angeordnet. Beide Mahlwerke 4, 8 sind mit je zwei Mahlscheiben 6a, 6b; 10a, 10b versehen, wovon jeweils die untere Mahlscheibe 6a, 10a von einem Elektromotor 5, 9 angetrieben ist, während die obere Mahlscheibe 6b, 10b drehfest angeordnet ist. Die Kaffeemaschine 1 umfasst im weiteren ein mit einer Brühkammer 13 versehenes Brühmodul 12, das dem Extrahieren der gemahlenen Kaffeebohnen mittels Brühwasser dient. Das Brühmodul 12 ist mit einem Auslass 14 für das zubereitete Kaffeegetränk versehen.

Ein derart unterteilter Bohnenbehälter 2 eignet sich insbesondere zur Aufnahme von zwei unterschiedlichen Bohnensorten. Beispielsweise können in das eine Fach Arabica- und in das andere Columbia-Kaffeebohnen eingefüllt werden. Eine andere Variante kann beispielsweise darin bestehen, dass in das eine Fach koffeinfreie Kaffeebohnen eingefüllt werden, so dass bei Bedarf jederzeit ein koffeinreduzierter oder ein koffeinfreier Kaffee zubereitet werden kann.

Jedes Mahlwerk 4, 8 ist mit einem Auslass 16, 17 für den gemahlenen Kaffee versehen. Diese beiden Auslässe 16, 17 münden in einen gemeinsamen, dem Befüllen der Brühkammer 13 dienenden Zufuhrkanal 18, welcher sich im wesentlichen in vertikaler Richtung nach unten erstreckt, so dass der gemahlene Kaffee der Schwerkraft folgend über diesen Zufuhrkanal 18 in die Brühkammer 13 gelangen kann. Das Brühmodul 12 ist vorzugsweise zwischen zwischen einer Füllstellung und der hier gezeigten Brühstellung, in der der gemahlene Kaffe verdichtet in der Brühkammer 13 aufgenommen ist, verschwenkbar. Die zum Verschwenken des Brühmoduls 12 notwendigen Verlagerungselemente sind nicht dargestellt.

Die Kaffeemaschine verfügt im weiteren über ein Vorwahlelement 20 in Form eines mit einer Skala 21 versehenen Schiebereglers 22, welcher dem Vorwählen der anteilsmässigen Menge an Kaffeebohnen, die aus dem jeweiligen Fach 2a, 2b entnommen und mittels des zugeordneten Mahlwerks 4, 8 gemahlen und zum Aufbrühen eines Kaffeegetränks verwendet wird, dient. Im vorliegenden Fall befindet sich der Schieberegler 22 in der Stellung 75/25, was bedeutet, dass zum Aufbrühen eines Kaffeegetränks 75% der Kaffeemenge aus dem linken Fach 2b entnommen wird, während die restlichen 25% dem rechten Fach 2a entnommen werden. Der Schieberegler 22 ist mit einer elektronischen Steuereinheit (nicht dargestellt) verbunden, mittels welcher das jeweilige Mahlwerk 4, 8 in Abhängigkeit der anteilsmässigen Menge an Kaffeebohnen, die zur Zubereitung eines Kaffeegetränks aus dem jeweiligen Fach 2a, 2b entnommen werden soll, aktiviert wird. Die entsprechende Mengenregelung wird vorzugsweise über das Messen der Anzahl Umdrehungen des jeweiligen Mahlwerks 4, 8 vorgenommen. Dazu sind beide Mahlwerke 4, 8 mit einem Drehzahlsensor (nicht dargestellt) ausgerüstet. Auf den vorliegenden Fall bezogen heisst das, dass das linke Mahlwerk 8 insgesamt dreimal so viele Umdrehungen ausführen muss wie das rechte Mahlwerk 4, damit zum Aufbrühen eines Kaffees 75% der Kaffeemenge aus dem linken Fach 2b stammt, während die restlichen 25% aus dem rechten Fach 2a zugeführt werden.

Soll für die Zubereitung eines Kaffees eine Kaffeepulvermischung verwendet werden, die Bohnen beider Sorten umfasst, so werden die Mahlwerke 4, 8 vorzugsweise zumindest teilweise gleichzeitig betrieben, damit sich die beiden Kaffeesorten schon im Zufuhrkanal 18 vermischen und der Brühkammer 13 eine homogene Kaffeepulvermischung zugeführt wird. Das gleichzeitige Betreiben der beiden Mahlwerke 4, 8 hat den weiteren Vorteil, dass sich der Mahlvorgang dadurch zeitlich verkürzt. Natürlich ist es auch möglich, die beiden Mahlwerke 4, 8 zeitlich nacheinander zu aktivieren.

Durch Verschieben des Schieberegelers 22 nach links oder rechts kann die anteilsmässige Menge an Kaffeebohnen, die zum Zubereiten eines Kaffeegetränks aus dem jeweiligen Fach 2a, 2b entnommen wird, verändert werden. Es versteht sich, dass anstelle des gezeigten Schiebereglers 22, mittels welchem insgesamt fünf Mengenvariationen, von 100% Bohnen aus dem einen Fach bis zu 100% Bohnen aus dem anderen Fach, vorgenommen werden können, auch beliebig andere Abstufungen bezüglich der Mengenvariation, bis zu einem stufenlosen Variieren, möglich sind. Anstelle eines Schiebereglers 22 können beispielsweise auch ein Drehknopf, ein Dreh-Druckknopf oder eine Mehrzahl von einzelnen, ggf. programmierbaren Tasten vorgesehen werden. Auch eine Ansteuerung über einen Berührungs- oder Näherungssensor, beispielsweise in Form eines Touch-Screen-Displays, ist möglich.

Ein grosser Vorteil einer derart ausgestalteten Kaffeemaschine 1 besteht darin, dass durch die direkte Zuordnung eines Mahlwerks 4, 8 zu dem jeweiligen Fach 2a, 2b oder dem jeweiligen Bohnenbehälter in dem jeweiligen Mahlwerk nur die eine Kaffeesorte gemahlen wird, so dass zumindest bis zum Auffüllen des jeweiligen Fachs 2a, 2b immer die selbe Bohnensorte mit dem entsprechenden Mahlwerk 4, 8 gemahlen wird und keine Rückstände einer anderen Bohnensorte in dem Mahlwerk 4, 8 zurückbleiben. Andererseits können zum Aufbrühen eines Kaffeegetränks auch unterschiedliche Bohnensorten verwendet werden, wobei auch deren anteilmässige Menge variierbar ist. Schliesslich sei erwähnt, dass natürlich auch drei oder mehr unterschiedliche Fächer oder Bohnenbehälter vorgesehen werden können, wobei auch in diesem Fall jedem Fach bzw. Bohnenbehälter ein eigenes Mahlwerk zugeordnet wird.

## Patentansprüche

1. Kaffeemaschine (1) mit zumindest einem Bohnenbehälter (2) zur Aufnahme von Kaffeebohnen, einem Mahlwerk zum Mahlen der Kaffeebohnen, sowie einem mit einer Brühkammer (13) versehenen Brühmodul (12) zum Extrahieren der gemahlenen Kaffeebohnen mittels Brühwasser, wobei der Bohnenbehälter (2) in zumindest zwei Fächer (2a, 2b) unterteilt ist oder zumindest zwei Bohnenbehälter vorhanden sind, und dass jedem Fach (2a, 2b) bzw. jedem Bohnenbehälter ein Mahlwerk (4, 8) zugeordnet ist **dadurch gekennzeichnet, dass** die Kaffeemaschine zumindest ein Vorwahlmittel (20) aufweist, mittels welchem eine zum Aufbrühen eines Kaffeegetränks verwendete Kaffepulvermischung veränderbar ist, indem die aus dem jeweiligen Fach (2a, 2b) oder Bohnenbehälter entnommene und mittels des zugeordneten Mahlwerks (4, 8) gemahlene Menge an Kaffeebohnen anteilsmässig verändert wird.

2. Kaffeemaschine (1) nach Anspruch 1, **dadurch gekennzeichnet, dass** das Vorwahlmittel (20) einen Dreh- oder Schieberegler, einen Berührungs- oder Näherungssensor oder mehrere Drucktasten umfasst.

3. Kaffeemaschine (1) nach Anspruch 1 oder 2, **dadurch gekennzeichnet, dass** das Vorwahlmittel (20) mit einer elektronischen Steuereinheit zum Ansteuern des jeweiligen Mahlwerks (4, 8) verbunden ist.

4. Kaffeemaschine (1) nach einem der vorhergehenden Ansprüche, **dadurch gekennzeichnet, dass** das Vorwahlmittel (20) derart ausgebildet ist, dass die anteilsmässige Menge an Kaffeebohnen, die aus dem jeweiligen Fach (2a, 2b) oder Bohnenbehälter entnommen und mittels des zugeordneten Mahlwerks (4, 8) gemahlen und zum Aufbrühen eines Kaffeegetränks verwendet wird, stufenlos oder in Stufen zwischen 0 und 100% bzw. zwischen 100 und 0% veränderbar ist.

5. Kaffeemaschine (1) nach einem der vorhergehenden Ansprüche, **dadurch gekennzeichnet, dass** die elektronische Steuereinheit derart ausgebildet ist, dass beide Mahlwerke (4, 8) gleichzeitig betrieben werden können.

6. Kaffeemaschine (1) nach einem der vorhergehenden Ansprüche, **dadurch gekennzeichnet, dass** jedes Mahlwerk (4, 8) mit einem Auslass (16, 17) für den gemahlenen Kaffee versehen ist, und dass die Auslässe (16, 17) in einen gemeinsamen, dem Befüllen der Brühkammer (13) dienenden Zufuhrkanal (18) münden.

7. Kaffeemaschine (1) nach Anspruch 5, **dadurch gekennzeichnet, dass** das Brühmodul (12) zwischen einer Füllstellung und einer Brühstellung verschiebbar oder verschwenkbar ist, wobei es in der Füllstellung mit dem Zufuhrkanal in Verindung steht.

8. Kaffeemaschine (1) nach einem der vorhergehenden Ansprüche, **dadurch gekennzeichnet, dass** das jeweilige Mahlwerk (4, 8) mit zumindest einer sich während des Mahlvorgangs drehenden Mahlscheibe (6b, 10b) versehen ist und je ein Sensor zum Erfassen der Anzahl Umdrehungen der jeweiligen Mahlscheibe (6b, 10b) vorhanden sind, wobei im weiteren eine elektronische Steuereinheit vorgesehen ist, mittels welcher die Anzahl Umdrehungen der jeweiligen Mahlscheibe (6a, 6b) in Abhängigkeit der an dem Mittel (20) zum Vorwählen der anteilsmässigen Menge an Kaffeebohnen vorgewählten Menge an Kaffeebohnen, die aus dem jeweiligen Fach (2a, 2b) oder Bohnenbehälter zum Aufbrühen eines Kaffeegetränks verwendet wird, veränderbar ist.

## Claims

1. Coffee machine (1) comprising at least one bean container (2) for holding coffee beans, a grinder for grinding the coffee beans, and a brewing module (12), which is provided with a brewing chamber (13), for extracting the ground coffee beans using brewing water, with the bean container (2) being divided into at least two compartments (2a, 2b) or at least two bean containers being provided, and with each compartment (2a, 2b) or each bean container having an associated grinder (4, 8), **characterized in that** the coffee machine has at least one preselection means (20) by means of which it is possible to vary a coffee powder mixture used to brew a coffee beverage by proportionally varying the quantity of coffee beans taken from the respective compartment (2a, 2b) or bean container and ground by means of the associated grinder (4, 8) .

2. Coffee machine (1) according to Claim 1, **characterized in that** the preselection means (20) comprises a rotary or sliding controller, a contact or proximity sensor or a plurality of pushbuttons.

3. Coffee machine (1) according to Claim 1 or 2, **characterized in that** the preselection means (20) is connected to an electronic control unit for actuating the respective grinder (4, 8).

4. Coffee machine (1) according to one of the preceding claims, **characterized in that** the preselection means (20) is formed in such a way that the proportional quantity of coffee beans taken from the respective compartment (2a, 2b) or bean container and ground by means of the associated grinder (4, 8) and used to brew a coffee beverage can be varied steplessly or in steps between 0 and 100% and, respectively, between 100 and 0%.

5. Coffee machine (1) according to one of the preceding claims, **characterized in that** the electronic control unit is formed in such a way that the two grinders (4, 8) can be operated simultaneously.

6. Coffee machine (1) according to one of the preceding claims, **characterized in that** each grinder (4, 8) is provided with an outlet (16, 17) for the ground coffee, and **in that** the outlets (16, 17) issue into a common supply channel (18) which serves to fill the brewing chamber (13).

7. Coffee machine (1) according to Claim 5, **characterized in that** the brewing module (12) can be moved or pivoted between a filling position and a brewing position, with the said brewing module being connected to the supply channel in the filling position.

8. Coffee machine (1) according to one of the preceding claims, **characterized in that** the respective grinder (4, 8) is provided with at least one grinding disc (6b, 10b) which rotates during the grinding operation and a sensor is provided in each case for detecting the number of revolutions of the respective grinding disc (6b, 10b), with an electronic control unit further being provided, by means of which the number of revolutions of the respective grinding disc (6b, 10b) can be varied as a function of the quantity of coffee beans preselected on the means (20) for preselecting the proportional quantity of coffee beans which is used from the respective compartment (2a, 2b) or bean container to brew a coffee beverage.

## Revendications

1. Machine à café (1) avec un réservoir à fèves (2) au moins servant à recevoir des fèves de café, un moulin pour moudre les fèves de café, ainsi qu'un module d'infusion (12), pourvu d'une chambre d'infusion (13), pour extraire les fèves de café moulues au moyen d'eau bouillante, le réservoir à fèves (2) étant divisé en deux compartiments (2a, 2b) au moins ou deux réservoirs à fèves au moins étant présents et à chaque compartiment (2a, 2b) étant associé un moulin (4, 8), **caractérisée en ce que** la machine à café présente au moins un moyen de présélection (20), au moyen duquel un mélange de poudres de café utilisé pour infuser du café peut être modifié, en changeant la proportion de la quantité de fèves de café prélevée dans le compartiment respectif (2a, 2b), puis moulue à l'aide du moulin associé (4, 8).

2. Machine à café (1) suivant la revendication 1, **caractérisée en ce que** le moyen de présélection (20) comprend un régulateur rotatif ou à coulisse, un capteur de contact ou un détecteur de proximité ou plusieurs touches.

3. Machine à café (1) suivant la revendication 1 ou 2, **caractérisée en ce que** le moyen de présélection (20) est relié à une unité de commande électronique servant à amorcer le moulin respectif (4, 8).

4. Machine à café (1) suivant une des revendications précédentes, **caractérisée en ce que** le moyen de présélection (20) est conçu de manière que la quantité proportionnelle de fèves de café prélevée dans le compartiment respectif (2a, 2b) ou dans le réservoir à fèves, puis moulue à l'aide du moulin associé (4, 8) et utilisée pour infuser du café, soit modifiable progressivement ou par gradations entre 0 et 100%, à savoir entre 100 et 0%.

5. Machine à café (1) suivant une des revendications précédentes, **caractérisée en ce que** l'unité de commande électronique est conçue de manière que les deux moulins (4, 8) puissent être actionnés en même temps.

6. Machine à café (1) suivant une des revendications précédentes, **caractérisée en ce que** chaque moulin (4, 8) est pourvu d'une sortie (16, 17) pour le café moulu et **en ce que** les sorties (16, 17) débouchent dans un canal d'amenée (18) servant au remplissage de la chambre d'infusion (13).

7. Machine à café (1) suivant la revendication 5, **caractérisée en ce que** le module d'infusion (12) peut être déplacé ou pivoté entre une position de remplissage et une position d'infusion, le module d'infusion (12) étant en liaison avec le canal d'amenée, lorsqu'il se trouve en position de remplissage.

8. Machine à café (1) suivant une des revendications précédentes, **caractérisée en ce que** le moulin respectif (4, 8) est pourvu au moins d'un disque de mouture (6b, 10b), qui tourne pendant le processus de mouture, et **en ce qu'**un capteur respectif est prévu pour détecter le nombre de tours du disque de mouture respectif (6b, 10b), une unité de commande électronique étant prévue en plus, à l'aide de laquelle le nombre de tours du disque de mouture respectif (6a, 6b) est modifiable en fonction de la quantité de fèves de café présélectionnée au moyen (20) de présélection de la quantité proportionnelle de fèves de café, qui est prélevée dans le compartiment respectif (2a, 2b) ou dans le réservoir à fèves pour infuser du café.
